# EUROPÄISCHE PATENTANMELDUNG

(11) **EP 1 655 237 A1**
(43) Veröffentlichungstag der Anmeldung: **10.05.2006**
(21) Anmeldenummer: 04026417.8
(22) Anmeldetag: 08.11.2004
(51) Int. Cl.: B65D 75/34, B32B 15/08, C09J 123/04

(54) **Deckfolie für Blisterverpackungen**

(71) Anmelder: Alcan Technology & Management Ltd., 8212 Neuhausen am Rheinfall (CH)
(72) Erfinder: Pasbrig, Erwin, 78224 Singen (DE)

(57) **Zusammenfassung**

Eine Deckfolie für thermo- und kaltgeformte Blister zur kindersicheren und seniorenfreundlichen Verpackung von Medikamenten und medizinischen Produkten besteht aus einer 5 bis 30 µm dicken Aluminiumfolie, die auf einer ersten Seite eine von der Aluminiumfolie peelbare Folie aus wenigstens einer Kunststoffschicht auf der Basis von thermo- oder duroplastischen Polymeren und gegebenenfalls einer Papierschicht aufweist. Auf der zweiten, zur Siegelung gegen ein Blisterbodenteil vorgesehenen Seite ist die Aluminiumfolie mit einer nicht, monoaxial oder biaxial gereckten Kunststofffolie bzw. mit Kunststoff auf der Basis von
- Polyvinylchlorid (PVC) mit einer Foliendicke von 10 bis 40 µm, oder
- Polyvinylidenchlorid (PVDC) mit einer Foliendicke von 10 bis 40 µm, oder
- Polypropylen (PP) mit einer Foliendicke von 6 bis 35 µm, oder
- Polyester mit einer Foliendicke von 5 bis 10 µm, oder
- Polychlortrifluorethylen (PCTFE) mit einer Foliendicke von 8 bis 30 µm, oder
- Cycloolefin-Copolymeren (COC) oder Cycloolefin-Polymeren (COP) mit einer Dicke von 10 bis 40 µm
   kaschiert oder beschichtet. Die peelbare Folie erschwert Kindern das Durchbeissen. Nach dem Entfernen der peelbaren Folie ist das verbleibende Aluminium/Kunststoff-Laminat jedoch durchdrückbar. Für Kinder im Testalter ist es aber schwierig, durch Beissen zum Füllgut zu gelangen.

## Beschreibung

Die Erfindung betrifft eine Deckfolie für Blisterverpackungen mit thermo- oder kaltgeformten Blisterbodenteilen zur kindergesicherten und seniorenfreundlichen Verpackung von pharmazeutischen Produkten.

Um die Anforderungen von Blisterpackungen an Kindersicherheit und Seniorenfreundlichkeit zu erfüllen, werden Deckfolien in der Form von Durchdrück-, Peel- und Peel-Push-Folien in Kombination mit entsprechenden Bodenfolien und Blisterdesign verwendet.

In den USA müssen alle Blisterverpackungen mit einem neuen Produkt, welches Kindersicherheit und Seniorenfreundlichkeit erfordert, in einem Praxistest geprüft werden. Ein entscheidendes Kriterium ist hier, dass die Kinder im Prüfalter aufgefordert werden, die Blisterpackung in den Mund zu nehmen und darauf zu beissen. Aus diesem Grund werden in den USA Verbundmaterialien mit der Schichtfolge Papier/PET/Aluminium/Heisssiegelschicht oder Papier/oPA/Aluminium/Heisssiegelschicht als Deckfolien eingesetzt. Da es für die Kinder im Testalter schwer möglich ist, diese Deckfolie zu durchbeissen, kann das Produkt im Blister aber auch nicht durch Herausdrücken aus der Packung entnommen werden. Die Deckfolie ist daher entweder als Peel- oder Peel-Push-Folie konzipiert, oder die Blisterpackung ist vom Bodenteil her über Öffnungshilfen aufreissbar. Bedingt durch die beissfeste Ausgestaltung der Deckfolie weisen diese Blisterverpackungen notwendigerweise Kreuzperforationen und versteckte Öffnungshilfen auf.

Blisterpackungen mit Peel-Push-Öffnung haben eine grosse Wahrscheinlichkeit, dass der Kinder- und Seniorentest bestanden wird. Nach ASTM VIIID wird der Test bezüglich der Kinder und der Erwachsenen bestanden.

Wenn die Kinder den peelbaren Teil entfernen konnten, dann ist es sehr leicht für sie, Zugang zu dem Füllgut zu bekommen, da die Aluminiumfolie mit einer Dicke von 20 oder 25 µm sehr leicht durchdrückbar ist, oder durch Beissen Zugang zu erlangen. Bedingt durch die stetig wachsende Lernfähigkeit der Kinder und die Verwendung von Blisterpackungen von Süsswaren, wächst der Anteil von nicht bestandenen Tests mit dieser Verpackungslösung.

Der Erfindung liegt die Aufgabe zugrunde, eine zur Siegelung gegen alle gängigen Bodenmaterialien geeignete Deckfolie zu schaffen, die ein verbessertes kindergesichertes und dennoch seniorenfreundliches Öffnen von Blisterpackungen durch Peel-Push ermöglicht und die auf bestehenden Abpackanlagen ohne Umrüsten eingesetzt werden kann.

Zur erfindungsgemässen Lösung der Aufgabe führt eine 10 bis 30 µm dicke Aluminiumfolie, die auf einer ersten Seite eine durch Peelen entfernbare Folie und auf der zweiten, zur Siegelung gegen ein Blisterbodenteil vorgesehenen Seite mit einer nicht, monoaxial oder biaxial gereckten Kunststofffolie auf der Basis von
- Polyvinylchlorid (PVC) mit einer Foliendicke von 10 bis 40 µm, oder
- Polyvinylidenchlorid (PVDC) mit einer Foliendicke von 10 bis 40 µm, oder
- Polypropylen (PP) mit einer Foliendicke von 6 bis 35 µm, oder
- Polyester mit einer Foliendicke von 5 bis 10 µm, oder
- Polychlortrifluorethylen (PCTFE) mit einer Foliendicke von 8 bis 30 µm, oder
- Cycloolefin-Copolymeren (COC) oder Cycloolefin-Polymeren (COP) mit einer Dicke von 10 bis 40 µm
   kaschiert ist.

Das Material der zur Siegelung gegen das Blisterbodenteil vorgesehenen Kunststofffolie wird entsprechend dem Material der zur Siegelung vorgesehenen Seite des Blisterbodenteils gewählt. Damit ist die Kompatibilität der chemischen Struktur der mit dem Füllgut in Kontakt kommenden Seite der erfindungsgemässen Deckfolie mit der chemischen Struktur der mit dem Füllgut in Kontakt kommenden Seite einer bisher verwendeten und zugelassenen Bodenfolie sichergestellt, so dass die Durchführung neuer Stabilitätsuntersuchungen nicht zwingend erforderlich ist.

Die Fertigung der gewünschten Blisterverpackungen mit der erfindungsgemässen Deckfolie kann auf bestehenden Anlagen erfolgen.

Die Aluminiumfolie weist bevorzugt eine Dicke von 10 bis 30 µm auf und kann im Zustand weich oder hart sein oder eine definierte Härte aufweisen.

Die peelbare Folie kann aus einer oder mehreren, gegebenenfalls gegen Papier kaschierte Schichten aus einem oder mehreren der Kunststoffe Polyvinylchlorid (PVC), Polyvinylidenchlorid (PVDC), Polychlortrifluorethylen (PCTFE), Polypropylen (PP), Polyethylen (PE) Polyester, Polyethylennaphthalat (PEN), Polyamid (PA), Cycloolefin-Copolymeren (COC), Polystyrol (PS) oder Zellglas bestehen.

Das Papier kann Pergaminpapier, Pergaminersatzpapier, unbehandeltes, gestrichenes oder satiniertes Papier sein und ein Flächengewicht von 17 bis 70 g/m² aufweisen.

Bevorzugt ist die peelbare Folie so gegen die Aluminiumfolie kaschiert, dass sie eine niedrige Haftfestigkeit im Bereich von 0.2 bis 5 N/15mm, vorzugsweise 1 bis 4 N/15 mm aufweist. Beim Peelen der Folie trennt sich der Kaschierkleber adhäsiv oder kohäsiv.

Die Dicke der Kunststoffschichten bzw. der einzelnen Kunststofffolien der peelbaren Folie beträgt vorzugsweise 10 bis 40 µm.

Mehrere Kunststoffschichten der peelbaren Folie können durch Kaschierung einzelner Folien mit wässrigen oder lösungsmittelbasierten Klebstoffen, durch Extrusionskaschierung, durch Beschichtung einer Folie mit anderem Kunststoff oder durch Coextrusion verbunden sind.

Das Papier kann mit dem Kunststoff durch Kaschierung mit einem wässrigen, einem lösungsmittelbasierten oder einem lösungsmittelfreien Klebstoff, durch Extrusionskaschierung, durch Beschichtung mit Kunststoff oder durch Heisskalandrierung verbunden sein.

Die Kunststofffolie bzw. der Kunststoff auf der zweiten Seite der Aluminiumfolie kann mit einem wässrigen, einem lösungsmittelbasierten oder einem lösungsmittelfreien Kaschiermittel, durch Extrusionskaschierung oder durch Heisskalandrierung gegen die Aluminiumfolie kaschiert oder als Beschichtung aufgetragen sein.

Bei einer Blisterverpackung mit einem Blisterbodenteil und einer gegen das Blisterbodenteil gesiegelten erfindungsgemässen Deckfolie besteht das Blisterbodenteil wenigstens auf der gegen die Deckfolie gesiegelten Seite aus einem Material, dessen chemische Struktur mit derjenigen der gegen das Blisterbodenteil gesiegelten Kunststofffolie kompatibel ist. Bevorzugt besteht das Blisterbodenteil wenigstens auf der gegen die Deckfolie gesiegelten Seite aus dem gleichen Material wie die gegen das Blisterbodenteil gesiegelte Kunststofffolie.

Beispiele von zur Herstellung von Blisterbodenteilen verwendeten Materialien sind Folien aus PVC, PVDC, PP, PET, PE und Verbundfolien wie PVC/ACLAR® (PCTFE), PVC/PVDC, COC und COP oder FORMPACK® (Al-Al Blister).

Es sei hier noch erwähnt, dass sowohl die Deckfolie als auch die Bodenfolie bedruckt sein können.

In der nachstehenden Tabelle sind Beispiele von erfindungsgemässen Deckfolien mit zugehöriger Durchdrückkraft, nach Entfernung der peelbaren Folie, zusammengestellt. Mit "Beschichtung innen" die zur Siegelung gegen das Blisterbodenteil gerichtete Beschichtung der Aluminiumfolie bezeichnet, jeweils unter Angabe des Flächengewichts bei Lack- und bei Papierbeschichtung bzw. der Foliendicke bei Folienbeschichtung und der Verbindungsart zwischen der Beschichtung und der Aluminiumfolie. Beispiel 1 ist die derzeit verwendete 20 µm dicke Aluminiumfolie im weichen Zustand.

| **Beispiel** | **Aluminiumfolie** | **Beschichtung innen** | **Durchdrückkraft [N]** |
|---|---|---|---|
| 1 | 20 µm, weich | 7 g/m² Heisssiegellack | 30 |
| 2 | 20 µm, hart | PVC-Folie, 15 µm lackkaschiert | 44 |
| 3 | 25 µm, weich | PVC-Folie, 25 µm lackkaschiert | 54 |
| 4 | 20 µm, hart | PVC-Folie, 30 µm Lackkaschiert | 61 |
| 5 | 20 µm, hart | PVDC-Folie, 25 µm Lackkaschiert | 77 |
| 6 | 20 µm, hart | PVC-Folie, 40 µm Lackkaschiert | 105 |
| 7 | 20 µm, hart | ACLAR®-Folie, 15 µm Lackkaschiert | 76 |
| 8 | 20 µm, hart | monoax. PP-Folie, 30 µm lackkaschiert | 89 |
| 9 | 20 µm, hart | monoax. PP-Folie, 20 µm extrusionskaschiert (7g/m²) | 90 |
| 10 | 25 µm, hart | monoax. PVC-Folie, 35 µm extrusionskaschiert (7g/m²) | 48 |

## Patentansprüche

1. Deckfolie für thermo- und kaltgeformte Blister zur kindergesicherten und seniorenfreundlichen Verpackung von Medikamenten und medizinischen Produkten, **gekennzeichnet durch** eine 10 bis 30 µm dicke Aluminiumfolie, die auf einer ersten Seite eine von der Aluminiumfolie peelbare Folie aus wenigstens einer Kunststoffschicht auf der Basis von thermo- oder duroplastischen Polymeren und gegebenenfalls einer Papierschicht aufweist und auf der zweiten, zur Siegelung gegen ein Blisterbodenteil vorgesehenen Seite mit einer nicht, monoaxial oder biaxial gereckten Kunststofffolie bzw. mit Kunststoff auf der Basis von
- Polyvinylchlorid (PVC) mit einer Foliendicke von 10 bis 40 µm, oder
- Polyvinylidenchlorid (PVDC) mit einer Foliendicke von 10 bis 40 µm, oder
- Polypropylen (PP) mit einer Foliendicke von 6 bis 35 µm, oder
- Polyethylen (PE) mit einer Foliendicke von 6 bis 35 µm, oder
- Polyester mit einer Foliendicke von 5 bis 10 µm, oder
- Polychlortrifluorethylen (PCTFE) mit einer Foliendicke von 8 bis 30 µm, oder
- Cycloolefin-Copolymeren (COC) oder Cycloolefin-Polymeren (COP) mit einer Dicke von 10 bis 40 µm
kaschiert oder beschichtet ist.

2. Deckfolie nach Anspruch 1, **dadurch gekennzeichnet, dass** die Aluminiumfolie 10 bis 30 µm dick ist.

3. Deckfolie nach Anspruch 1 oder 2, **dadurch gekennzeichnet, dass** die peelbare Folie aus einer oder mehreren Schichten aus einem oder mehreren der Kunststoffe Polyvinylchlorid (PVC), Polyvinylidenchlorid (PVDC), Polychlortrifluorethylen (PCTFE), Polypropylen (PP), Polyethylen (PE) Polyester, Polyethylennaphthalat (PEN), Polyamid (PA), Cycloolefin-Copolymeren (COC), Cycloolefin-Polymeren (COP), Polystyrol (PS) oder Zellglas besteht.

4. Deckfolie nach Anspruch 1 oder 2, **dadurch gekennzeichnet, dass** die peelbare Folie aus einer oder mehreren gegen Papier kaschierte Schichten aus einem oder mehreren der Kunststoffe Polyvinylchlorid (PVC), Polyvinylidenchlorid (PVDC), Polychlortrifluorethylen (PCTFE), Polypropylen (PP), Polyethylen (PE) Polyester, Polyethylennaphthalat (PEN), Polyamid (PA), Cycloolefin-Copolymeren (COC), Cycloolefin-Polymeren (COP), Polystyrol (PS) oder Zellglas besteht.

5. Deckfolie nach einem der Ansprüche 1 bis 4, **dadurch gekennzeichnet, dass** das Papier unbehandeltes, gestrichenes oder satiniertes Papier, Pergaminpapier oder Pergaminersatzpapier ist und ein Flächengewicht von 17 bis 70 g/m² aufweist.

6. Deckfolie nach einem der Ansprüche 1 bis 5, **dadurch gekennzeichnet, dass** die Dicke der Kunststoffschichten 10 bis 40 µm beträgt.

7. Deckfolie nach einem der Ansprüche 1 bis 6, **dadurch gekennzeichnet, dass** mehrere Kunststoffschichten durch Kaschierung einzelner Folien mit wässrigen oder lösungsmittelbasierten Klebstoffen, durch Extrusionskaschierung, durch Beschichtung einer Folie mit anderem Kunststoff oder durch Coextrusion verbunden sind.

8. Deckfolie nach einem der Ansprüche 1 bis 6, **dadurch gekennzeichnet, dass** das Papier mit dem Kunststoff durch Kaschierung mit einem wässrigen, einem lösungsmittelbasierten oder einem lösungsmittelfreien Klebstoff, durch Extrusionskaschierung, durch Beschichtung mit Kunststoff oder durch Heisskalandrierung verbunden.

9. Deckfolie nach einem der Ansprüche 1 bis 6, **dadurch gekennzeichnet, dass** die Kunststofffolie bzw. der Kunststoff auf der zweiten Seite der Aluminiumfolie mit einem wässrigen, einem lösungsmittelbasierten oder einem lösungsmittelfreien Kaschiermittel, durch Extrusionskaschieren, oder Heisskalandrierung gegen die Aluminiumfolie kaschiert oder als Beschichtung aufgetragen ist.

10. Blisterverpackung mit einem Blisterbodenteil und einer gegen das Blisterbodenteil gesiegelten Deckfolie, **dadurch gekennzeichnet, dass** die Deckfolie eine 10 bis 30 µm dicke Aluminiumfolie ist, die auf einer ersten Seite eine von der Aluminiumfolie peelbare Folie aus wenigstens einer Kunststoffschicht auf der Basis von thermo- oder duroplastischen Polymeren und gegebenenfalls einer Papierschicht aufweist und auf der zweiten, gegen das Blisterbodenteil gesiegelten Seite mit einer nicht, monoaxial oder biaxial gereckten Kunststofffolie bzw. mit Kunststoff auf der Basis von
- Polyvinylchlorid (PVC) mit einer Foliendicke von 10 bis 40 µm, oder
- Polyvinylidenchlorid (PVDC) mit einer Foliendicke von 10 bis 40 µm, oder
- Polypropylen (PP) mit einer Foliendicke von 6 bis 35 µm, oder
- Polyethylen (PE) mit einer Foliendicke von 6 bis 35 µm, oder
- Polyester mit einer Foliendicke von 5 bis 10 µm, oder
- Polychlortrifluorethylen (PCTFE) mit einer Foliendicke von 8 bis 30 µm, oder
- Cycloolefin-Copolymeren (COC) oder Cycloolefin-Polymeren (COP), mit einer Dicke von 10 bis 40 µm
kaschiert oder beschichtet ist, und dass das Blisterbodenteil wenigstens auf der gegen die Deckfolie gesiegelten Seite aus einem Material besteht, dessen chemische Struktur mit derjenigen der gegen das Blisterbodenteil gesiegelten Kunststofffolie kompatibel ist.

11. Blisterverpackung nach Anspruch 10, **dadurch gekennzeichnet, dass** das Blisterbodenteil wenigstens auf der gegen die Deckfolie gesiegelten Seite aus dem gleichen Material besteht wie die gegen das Blisterbodenteil gesiegelte Kunststofffolie.

12. Blisterverpackung nach Anspruch 10 oder 11, **dadurch gekennzeichnet, dass** die Aluminiumfolie 10 bis 30 µm dick ist.

13. Blisterverpackung nach einem der Ansprüche 10 bis 12, **dadurch gekennzeichnet, dass** die peelbare Folie aus einer oder mehreren Schichten aus einem oder mehreren der Kunststoffe Polyvinylchlorid (PVC), Polyvinylidenchlorid (PVDC), Polychlortrifluorethylen (PCTFE), Polypropylen (PP), Polyethylen (PE) Polyester, Polyethylennaphthalat (PEN), Polyamid (PA), Cycloolefin-Copolymeren (COC), Cycloolefin-Polymeren (COP), Polystyrol (PS) oder Zellglas besteht.

14. Blisterverpackung nach einem der Ansprüche 10 bis 12, **dadurch gekennzeichnet, dass** die peelbare Folie aus einer oder mehreren gegen Papier kaschierte Schichten aus einem oder mehreren der Kunststoffe Polyvinylchlorid (PVC), Polyvinylidenchlorid (PVDC), Polychlortrifluorethylen (PCTFE), Polypropylen (PP), Polyethylen (PE) Polyester, Polyethylennaphthalat (PEN), Polyamid (PA), Cycloolefin-Copolymeren (COC), Cycloolefin-Polymeren (COP), Polystyrol (PS) oder Zellglas besteht.

15. Blisterverpackung nach einem der Ansprüche 10 bis 14, **dadurch gekennzeichnet, dass** das Papier unbehandeltes, gestrichenes oder satiniertes Papier, Pergaminpapier oder Pergaminersatzpapier ist und ein Flächengewicht von 17 bis 70 g/m² aufweist.

16. Blisterverpackung nach einem der Ansprüche 10 bis 15, **dadurch gekennzeichnet, dass** die Dicke der Kunststoffschichten 10 bis 40 µm beträgt.

17. Blisterverpackung nach einem der Ansprüche 10 bis 16, **dadurch gekennzeichnet, dass** mehrere Kunststoffschichten durch Kaschierung einzelner Folien mit wässrigen oder lösungsmittelbasierten Klebstoffen, durch Extrusionskaschierung, durch Beschichtung einer Folie mit anderem Kunststoff oder durch Coextrusion verbunden sind.

18. Blisterverpackung nach einem der Ansprüche 10 bis 16, **dadurch gekennzeichnet, dass** das Papier mit dem Kunststoff durch Kaschierung mit einem wässrigen, einem lösungsmittelbasierten oder einem lösungsmittelfreien Klebstoff, durch Extrusionskaschierung, durch Beschichtung mit Kunststoff oder durch Heisskalandrierung verbunden ist.

19. Blisterverpackung nach einem der Ansprüche 10 bis 16, **dadurch gekennzeichnet, dass** die Kunststofffolie bzw. der Kunststoff auf der zweiten Seite der Aluminiumfolie mit einem wässrigen, einem lösungsmittelbasierten oder einem lösungsmittelfreien Kaschiermittel, durch Extrusionskaschieren, oder Heisskalandrierung gegen die Aluminiumfolie kaschiert oder als Beschichtung aufgetragen ist.
